# EUROPEAN PATENT APPLICATION

(11) **EP 1 647 816 A1**
(43) Date of publication of application: **19.04.2006**
(21) Application number: 05076982.7
(22) Date of filing: 31.08.2005
(51) Int. Cl.: G01L 3/10

(54) **Digitally compensated non-contact steering angle and torque sensor**

(30) Priority: 15.10.2004 US 966291
(71) Applicant: BEI SENSORS AND SYSTEMS COMPANY, INC., Sylmar, CA 91342-3573 (US)
(72) Inventor: Madni, Asad M., Los Angeles California 90064 (US); Vuong, Jim B., Northridge California 91326 (US)
(74) Representative: Newstead, Michael John

(57) **Abstract**

A sensor assembly having an angular position sensor unit and a torque sensor unit enclosed in a single package. The angular position sensor unit generates a first multi-bit output indicative of a degree of rotation of a shaft assembly having a first shaft and a second shaft. The first and second shafts are substantially co-axial to each other and coupled to each other via a torsion rod. The torque sensor unit generates a second multi-bit output indicative of a torque exerted between the first shaft and the second shaft. The second multi-bit output may be linearized and temperature compensated using the first multi-bit output and measured temperature to generate a linearized and temperature compensated torque sensor output.

## Description

### FIELD OF THE INVENTION

The present invention relates to sensors for automotive applications, and more particularly, to a sensor package and method for sensing angular information and torque of a steering shaft, and for providing a linearized and temperature compensated torque sensor output.

### BACKGROUND

In electronic steering systems for automotive applications, angular information and torque experienced by a steering wheel are measured to accurately determine speed, direction and angle of rotation of the steering wheel as well as the effort (i.e., torque) being applied by the driver. The sensors for measuring the angular information and torque must meet demanding automotive requirements of relatively long sensor life under hostile environmental conditions for stability control and e-steering applications.

Angular position sensors have been used to provide angular information of the rotation of a steering shaft. A non-contact angular position sensor (NCAPS) disclosed in U.S. Patent No. 6,304,076 entitled "Angular Position Sensor with Inductive Attenuating Coupler," has a non-contact structure and can provide angular information of the rotation of a steering shaft in analog and pulse width modulation (PWM) format with analog resolution (i.e., without step size).

Capacitive torque sensors, such as the capacitive torque sensor disclosed in U.S. Patent No. 6,564,654 ("the '654 patent") entitled "Vertical Movement Capacitive Torque Sensor," have been used to measure the torque of a torsion rod that is embedded within the split shaft of a steering column. The torque sensing technology disclosed in the '654 patent may be referred to as non-contacting differential capacitive torque sensing (NCDCTS).

Use of multiple sensors for the measurement of angular information and torque using technologies such as NCAPS and NCDCTS results in a use of multiple sensor packages, thereby increasing the total cost and size. Further, the output of the torque sensor may be non-linear, and the torque sensor performance is affected by temperature, thereby degrading the sensor performance.

Therefore, it is desirable to provide a method and apparatus for implementing the functions and components of an angular information sensor and a torque sensor in a single package, i.e., within the same housing. Further, it is desirable to provide linearization and temperature compensation of the torque sensor output.

### SUMMARY

In an exemplary embodiment of the present invention, a sensor assembly including an angular position sensor unit and a torque sensor unit is provided. The angular position sensor unit generates a first multi-bit output indicative of a degree of rotation of a shaft assembly having a first shaft and a second shaft that are substantially co-axial to each other and coupled to each other via a torsion rod. The torque sensor unit generates a second multi-bit output indicative of a torque exerted between the first shaft and the second shaft. A housing encloses both the angular position sensor unit and the torque sensor unit in a single package.

A steering shaft assembly may include the above sensor assembly mounted on the shaft assembly for controlling steering of a vehicle.

In another exemplary embodiment according to the present invention, a sensor system for generating a linearized and temperature compensated torque sensor output is provided. The sensor system includes an angular position sensor block, a torque sensor block, a linearization block, and a temperature compensation block. The angular position sensor block generates a first multi-bit output indicative of a degree of rotation of a shaft assembly having a first shaft and a second shaft that are substantially co-axial to each other and coupled to each other via a torsion rod. The torque sensor block generates a second multi-bit output indicative of a torque exerted between the first shaft and the second shaft. The linearization block receives the first and second multi-bit outputs and uses them to generate a linearized torque sensor output. The temperature compensation block receives the linearized torque sensor output and uses it to generate the linearized and temperature compensated torque sensor output.

In yet another exemplary embodiment according to the present invention, a sensor system for generating a linearized and temperature compensated torque sensor output is provided. The sensor system includes angular position sensor block, a torque sensor block and a linearization and temperature compensation block. The angular position sensor block generates a first multi-bit output indicative of a degree of rotation of a shaft assembly having a first shaft and a second shaft that are substantially co-axial to each other and coupled to each other via a torsion rod. The torque sensor block generates a second multi-bit output indicative of a torque exerted between the first shaft and the second shaft. The linearization and temperature compensation block receives the first and second multi-bit outputs and uses them to generate the linearized and temperature compensated torque sensor output.

In yet another exemplary embodiment according to the present invention, is provided a method of linearizing and temperature compensating a torque sensor output indicative of a torque exerted between a first shaft and a second shaft of a shaft assembly that are substantially co-axial to each other and coupled together via a torsion rod. The method includes: generating an angular position signal indicative of a degree of rotation of the shaft assembly; converting the angular position signal to a first multi-bit signal; generating the torque sensor output; converting the torque sensor output to a second multi-bit signal; and generating a linearized and temperature compensated torque sensor output using the first and second multi-bit signals.

These and other aspects of the invention will be more readily comprehended in view of the discussion herein and accompanying drawings.

### BRIEF DESCRIPTION OF THE DRAWINGS

FIG. 1 is a cross-sectional view of an angular position sensor, which may be used to implement exemplary embodiments of the present invention;
FIG. 2 is a plan view of both transmitter and receiver portions of FIG. 1;
FIG. 3 is a plan view of a coupler disk of FIG. 1;
FIG. 4 is a functional block diagram of an angular position sensor, which may be used to implement angular information sensing function in exemplary embodiments of the present invention;
FIG. 5 is a conceptual diagram of a differential capacitive sensor structure, which may be used to implement torque sensing function in exemplary embodiments of the present invention;
FIG. 6 is a mechanical structure of a dielectric paddle assembly, which may be used to implement torque sensing function in exemplary embodiments of the present invention;
FIG. 7 is a partial sectional view of a dielectric paddle assembly of FIG. 6.
FIG. 8 is a circuit diagram of a typical ASIC capacitive sensor signal conditioning circuit;
FIG. 9 is a functional block diagram of an angular-torque sensor according to a first exemplary embodiment of the present invention;
FIG. 10 is a partial sectional view of an angular-torque sensor using angular position sensor (e.g., NCAPS) and torque sensor (e.g., NCDCTS) technologies;
FIG. 11 is an exploded view of the mechanical packaging of an angular-torque sensor, which is enclosed in a single package;
FIG. 12 is a functional block diagram of a linearization/temperature compensation portion of an angular-torque sensor according to a secondary exemplary embodiment of the present invention;
FIG. 13 is a functional block diagram of a linearization/temperature compensation portion of an angular-torque sensor according to a third exemplary embodiment of the present invention; and
FIG. 14 is a functional block diagram of a linearization/temperature compensation portion of an angular-torque sensor according to a fourth exemplary embodiment of the present invention.

### DETAILED DESCRIPTION

In exemplary embodiments according to the present invention, an angular position sensor (e.g., NCAPS) and a torque sensor (e.g., NCDCTS) are packaged in a single package (i.e., within the same housing) such that it results in a smaller total size and less cost as compared with implementing them in multiple separate packages. Further, the torque sensor output is linearized and temperature compensated for better accuracy over a range of temperatures using an angular position sensor output and temperature measurements.

NCAPS is disclosed in U.S. Patent No. 6,304,076, the entire content of which is incorporated by reference herein. Further, NCDCTS is disclosed in U.S. Patent No. 6,564,654, the entire content of which is incorporated by reference herein.

By way of example, when NCAPS and NCDCTS are used, such combination of an angular position and torque information sensor having a non-contact structure results in a single package for lower cost, improved performance, and increased life span. Such sensor assembly including both the angular position sensing and torque sensing in addition to having capabilities to linearize and temperature compensate the torque sensor output may be referred herein as an angular-torque sensor. The angular-torque sensor may also output the angular position information and/or uncompensated torque sensor output as separate outputs.

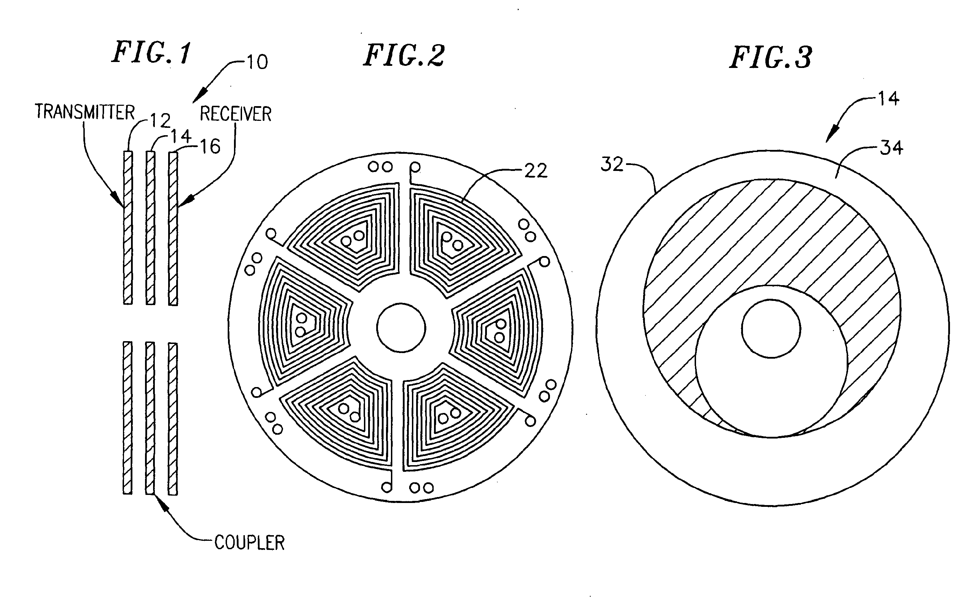

Referring now to FIG. 1, an angular position sensor 10 includes a transmitter 12 and a receiver 16 having a coupler disk 14 interposed therebetween. As can be seen in FIG. 2, both the transmitter 12 and the receiver 16 each have formed thereon a plurality of loop antennas 22. The loop antennas are formed from independent spiral conductive coils that are sequentially arranged in a circular pattern around the respective disk of the transmitter and the receiver. By way of example, six antennas 22 of FIG..2 completely encircle the 360 degrees of the disk.

The transmitter 12 and the receiver 16 are substantially fixed with respect to one another. The coupler disk 14 turns in accordance with the mechanical turning of a device (e.g., a steering shaft) on which the angular sensor is mounted. Each loop antenna 22 in the transmitter 12 is used to transmit a signal that is received by a corresponding loop antenna 22 in the receiver. When there is no interfering (attenuating) object in the signal path, the amplitude of the received signal is maximum. However, if an attenuating object is used to cause interference in this path, the amplitude of the received signal is attenuated. The received signal is attenuated proportionally to the amount of interference provided by the interfering object.

FIG. 3 illustrates the coupler disk 14 having a disk 32 on which a coupler pattern 34 is formed. The coupler pattern 34 provides the variable attenuation in the angular position sensor 10 as an interfering (attenuating) object. The disk 32, for example, is made of an insulating material such as plastic. The coupler pattern 34 is made of metal such as copper.

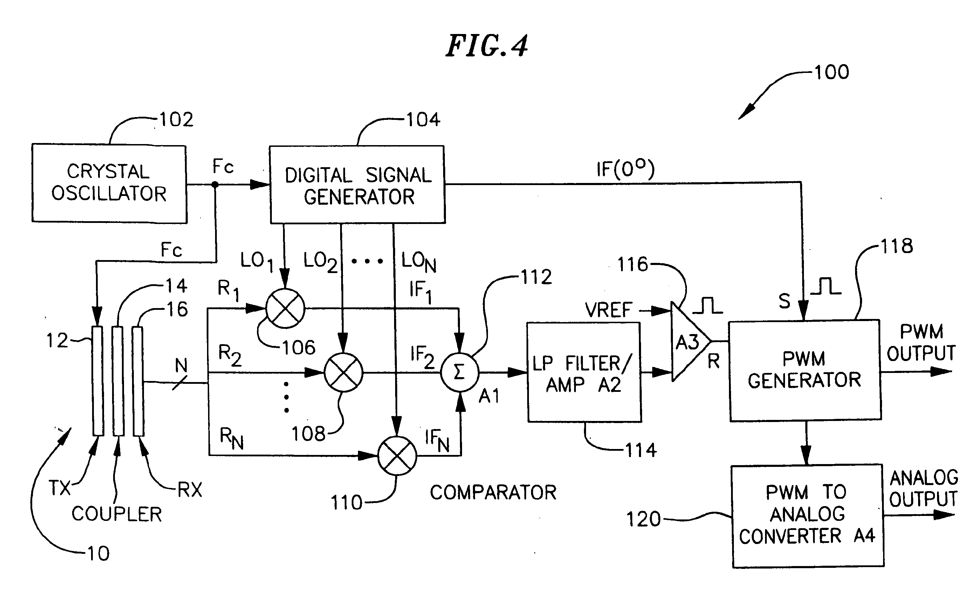

A multi-channel system with an amplitude to phase conversion technique is used in the angular position sensor to convert the amplitude information into phase information. The phase separation in degrees between adjacent channels is determined by Δθ= 2n/N, where N is the number of channels. Therefore, in the angular position sensor illustrated in FIG. 2, Δθ = n/3 since N = 6. In an angular position sensor functional block diagram 100 of FIG. 4, the angular position sensor 10 receives a frequency Fc generated by a crystal oscillator 102. The frequency Fc, for example, may be 1 MHz. The frequency used may be different in other embodiments. The frequency Fc is also provided to a digital signal generator 104, which generates a plurality of local oscillator signals LO₁ through LO_{N}. The digital signal generator 104 also generates a reference signal S, which represents a zero degree intermediate frequency (IF) signal. The reference signal S may have a frequency of 2.22 KHz, for example, or any other suitable frequency. The local oscillator signals are approximately the same in frequency as the frequency Fc. However, they are offset in phase from each other by Δθ, which is 60 degrees (i.e., n/3) for the case where N = 6. Each of the local oscillator signals, for example, may be represented by LOᵢ = cos ω_{c}t - cos[ω₀t+2π(i/N)], where ω_{c} is the transmitted signal frequency, and ω₀ is a predetermined IF.

Meanwhile, N received signals R₁ through R_{N} are generated by the angular position sensor 10. Since the coupler pattern 34 interferes with and attenuates the transmission of signal between the loop antennas 22 of the transmitter 12 and the receiver 16, the received signals have different amplitude based on the angular position of the coupler disk 14. The signal amplitude at each receiver (Rᵢ), for example, is defined by Ri (t) - Aᵢcos((O,t), where Aᵢ = A cos [θ + 2n (i/N)]. In other words, while A is the magnitude of the signal transmitted by each of the loop antennas 22 in the transmitter 12, due to variable attenuation provided by the coupler disk 14, the magnitude of the signal received by the loop antennas 22 in the receiver 16 are different from one another and are given by Aᵢ = A cos [θ + 2n (i/N)] , and depends on the angular position (θ) of the coupler disk 14.

The received signals R₁ through R_{N} are mixed with the local oscillator signals LO₁ through LO_{N}. First, the received signals are multiplied by the corresponding local oscillator signals by multipliers 106, 108 and 110, respectively, to generate IF signals IF₁ through IF_{N}. Based on the mixer down conversion process, the relationship between LO, IF and RF (transmitted frequency) is defined by IF = RF - LO. Assuming a lossless mixer, each of the IF signals may be represented by IFᵢ = Aᵢ cos[ω₀t + 2n (i/N)].

The IF signals are then converted into a single sinusoidal signal using a summing amplifier 112 such that the phase shift changes of the signal depend on the angular position of the coupler disk. Since the signals received by each of the channels are ratiometric with respect to each other, variations in the transmitted signal amplitude have no effect on the resulting phase information. The signal at the output of the amplifier 112 is given by IF = ½Acos (ω₀t - θ) . From this equation, it can be seen that the output signal of the amplifier 112 is a phase relationship representing the angular position of the coupler disk 14 and is not dependent on the transmitted signal amplitude variation. The signal output of the summing amplifier 112 is passed through a low pass filter/amplifier 114 and a comparator 116 to generate a combined received signal R (which may also be referred to hereafter as a "received signal").

The PWM output of the angular position sensor is generated by comparing the received signal R to the reference signal S in a PWM generator 118 as shown in FIG. 4. The PWM generator may simply be a flip flop, such as an RS flip flop.

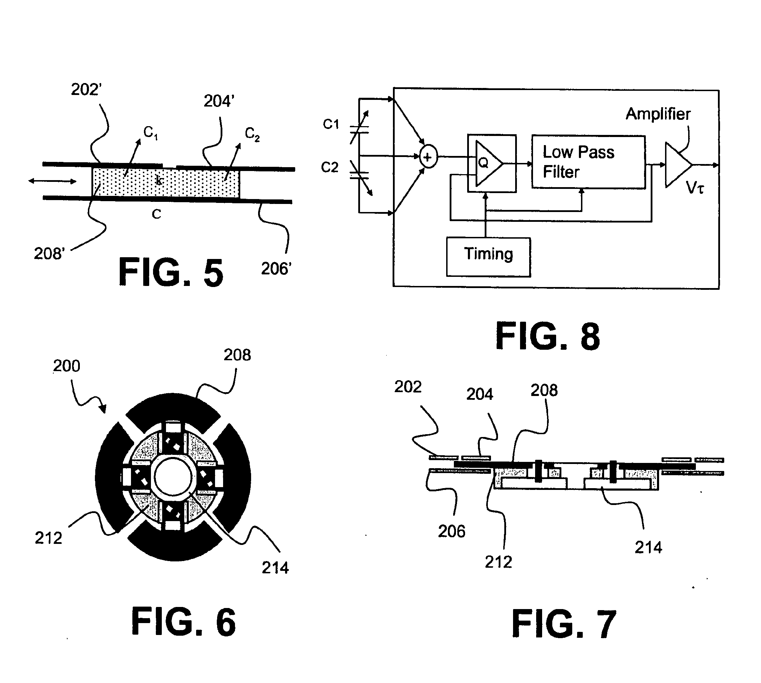

As can be seen in FIG. 5, a differential capacitive structure of a torque sensor includes two parallel plates, one with two concentric rings 202' and 204' and the other with a single ring 206' to form two capacitors C1 and C2 that are connected in series. A dielectric material 208' having a dielectric constant k is placed between the parallel plates and is moved in at least a radial direction between the two plates to change capacitance values of the capacitors C1 and C2.

In one configuration of a differential capacitive torque sensor as shown in FIGs. 6 and 7, a paddle assembly 200 includes one or more movable dielectric paddles 208. The paddle assembly 200 is coupled to a first rotor 212 and a second rotor 214 such that the paddles move in a radial direction depending on the torque exerted between the first rotor 212 and the second rotor 214, which are substantially co-axial to each other. As the dielectric paddles move in and out between these two substantially concentric rotors, the values of C1 and C2 change accordingly. By way of example, when the dielectric paddles move into the C1 area, the capacitance of C1 increases and C2 decreases. On the other hand, when the dielectric paddles move away from the C1 area and toward the C2 area, the capacitance of C1 decreases and the capacitance of C2 increases. The output of the torque sensor can be expressed, for example, as Vout = Gain x (C1-C2) + Voffset where Gain is signal conditioning amplifier gain and Voffset is voltage compensation for zero torque position.

In practice, the first rotor 212 would be mounted on a first shaft (not shown), and the second rotor 214 would be mounted on a second shaft (not shown), wherein the first and second shafts are coupled via a torsion rod which is embedded therebetween. When the first rotor 212 is rotated with respect to the second rotor 214 due to the exerted torque, the paddles move in the direction and by distance corresponding to the torque experienced by the torsion rod.

A typical "off-the-shelf", Application Specific Integrated Circuit (ASIC), capacitive sensor driver as shown in FIG. 8 is readily available and provides a suitable signal conditioning circuit. This circuit is based on a charge compensation feedback loop, and converts the difference of two capacitances, relative to their sum, into an analog voltage. Any other suitable circuitry known to those skilled in the art may be used to generate the torque sensor output as well.

The differential capacitive technique of FIGs. 5-8 is a relatively simple approach for measuring the narrow angular displacement of the torsion rod, which is embedded within the steering shaft, during the ± 2.5 turns of rotation of the steering from lock-to-lock position. However, the parallel plate structure of the capacitor is very sensitive to the mechanical tolerance and temperature variation effects of the spacing between the plates. The relationship may be expressed, for example, as: C = (k.A) / d, where C is the capacitance in Farads, A is the area, d is the distance (spacing) between the parallel plates and k is the equivalent dielectric constant of the elements that fill in spacing d. Any change in d will vary the capacitance value. For example, capacitance increases when d is decreased and capacitance decreases when d is increased.

Typical linearity and tracking error of such torque sensor is better than 1% FS (Full Scale). If a better than 0.5% FS linearity, or an absolute error is desired, a linearization circuit should be used to improve the sensor performance. By way of example, as NCAPS provides an absolute angular position of the coupler as a PWM signal that can be digitized into 360 different digital codes (each corresponding to 1° of angular rotation) for one full rotation of the sensor (360° of angular rotation), each code can also be used as a reference angular position address corresponding to one degree of rotation of the torque sensor.

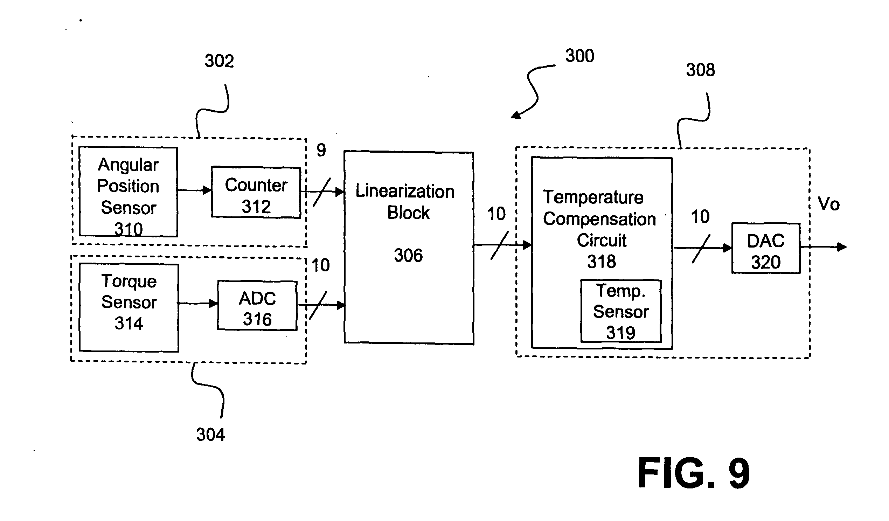

As shown in FIG. 9, an angular-torque sensor 300 according to a first exemplary embodiment includes an angular position sensor block ("angular position sensor unit") 302, a torque sensor block ("torque senor unit") 304, a linearization block 306 and a temperature compensation block 308.

The angular position sensor block 302' includes an angular position sensor (e.g., NCAPS) 310 and a counter 312. The angular position sensor block 302 provides a 360° absolute angular position with 9-bit digital output which also serves as a reference for the torque sensor. The angular position sensor 310, for example, generates a PWM signal indicative of the angular position (e.g., of a steering wheel). The counter 312, which is a 9-bit counter in the described embodiment, receives the PWM signal as an input, and generates a multi-bit (i.e., 9 bits) counter output which corresponds to the width of the PWM signal. In other embodiments, of course, the counter may have different number of bits in its output to represent the width of the PWM signal. Further, in still other embodiments, the angular position sensor may output different types (i.e., other than PWM) of signals indicative of the angular position.

The torque sensor block 304 includes a torque sensor 314 and an analog-to-digital converter (ADC) 316. The torque sensor 314 has an analog output indicative of an effort (i.e., torque) exerted by a user (e.g., such as on a steering wheel) . The ADC 316 converts the analog output into a 10-bit digital output, and provides it as the output of the torque sensor block 304. Here and elsewhere in the specification, the term "digital" may be used to refer to a signal or output generated by digitizing a corresponding analog signal or output, and may be used interchangeably with the term "digitized." In other embodiments, the ADC may have an output having a number of bits different from 10.

The linearization block 306 is used to linearize the torque sensor output generated by the torque sensor block 304. In the described embodiment, since the angular position sensor block 302 and the torque sensor block 304 have a 9-bit output and a 10-bit output, respectively, the linearization block 306 receives a 19-bit input. However, the number of input bits may be different in other embodiments, provided that the angular position sensor block output has at least 9 bits if representation of 360° with 1° resolution is desired.

The linearization block 306 may include a look-up table implemented in memory and having linearized torque sensor output values (i.e., linearization compensation values) as entries. These entries are selected by the input bits (i.e., 19 bits from the angular position sensor output and the torque sensor output) to be output as linearized torque sensor outputs corresponding to the multi-bit outputs (i.e., the angular position sensor and torque sensor outputs) from the angular position sensor block 302 and the torque sensor block 304 that are combined to form an address for such selection.

By way of example, when implemented in a look-up table, the linearization block 306 is basically a data memory that contains the compensation data for the linearization of the torque sensor output. When the 9-bit output from the angular position sensor 310 is connected to the higher address bits of the look-up table and the 10-bit output from the torque sensor is connected to the lower address bits of the look-up table, linearization values can be selected from one of the 360 sets of lk data memory, for example. Combining the higher and lower address bits to select entries in the look-up table will provide a 10-bit linearization value (i.e., code) for compensating the output of the torque sensor corresponding to each degree of the rotation.

The linearization block 306 may alternatively include logic circuitry for linearizing the digitized torque sensor output using the output of the angular position sensor block 302. The logic circuitry may be implemented using a microprocessor, a digital signal processor (DSP), an ASIC, or any suitable combination thereof. The logic used for performing such linearization is known to those skilled in the art.

The temperature compensation block 308 receives the linearized torque sensor output from the linearization block 306, and provides a linearized and temperature compensated torque sensor output. The temperature compensation block 308 includes a temperature compensation circuit 318 for generating a multi-bit (i.e., 10-bit) output and a digital-to-analog converter 320 for converting the multi-bit output to generate a linearized and temperature compensated torque sensor output, which is an analog voltage signal Vₒ.

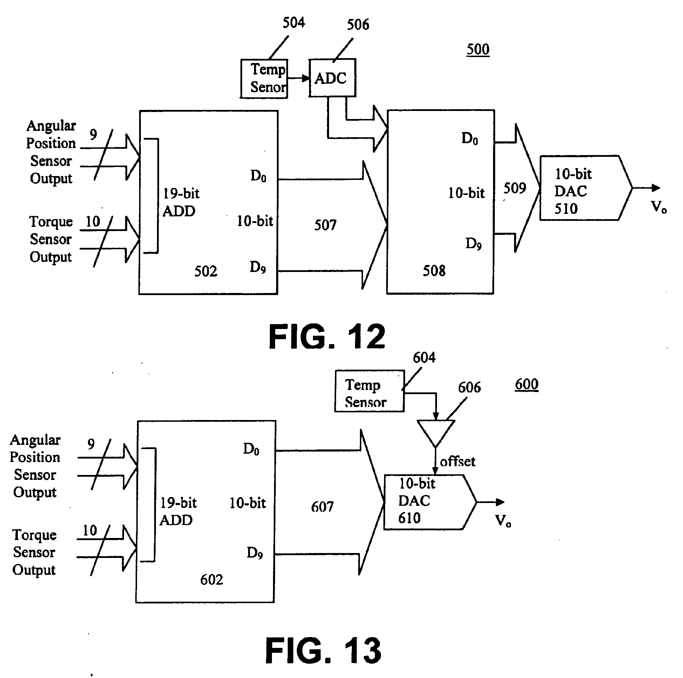

The temperature compensation circuit 318 also includes a temperature sensor block/circuit 319 for measuring temperature and providing it in an analog or digital form. In other embodiments, the temperature compensation block 308 may include a temperature sensor which is external to the temperature compensation circuit 318 (similar to the temperature sensor 504 and the analog-to-digital converter 506 of FIG. 12, for example).

In more detail, the temperature compensation circuit 318 compensates the digitized and linearized torque sensor output based on temperature to generate a 10-bit output of a linearized and temperature compensated torque sensor output. The temperature compensation circuit 318 may be implemented in memory as a look-up table, for example, or as logic circuitry (e.g., implemented using microprocessor, DSP and/or ASIC). The logic used for such temperature compensation is known to those skilled in the art. Also, the number of output bits may be different in other embodiments. The DAC 320 receives the 10-bit output from the temperature compensation circuit 318 and converts it into an analog voltage signal Vₒ, which is the linearized and temperature compensated torque sensor output.

The temperature compensation block 308, therefore, provides an analog output that is a linear function of the external temperature. In the described embodiment, it is composed of a look-up table and a temperature sensor which together provide a linearized and temperature compensated torque sensor output that is corrected for external temperature variation. Each table address contains a digital code (i.e., temperature compensation value) that is used with the corresponding linearized value from the linearization look-up table to generate the linearized and temperature compensated torque sensor output. In other words, the entries of the look up table are linearized and temperature compensated torque sensor output values that are addressed by a combination of the multi-bit output from the angular position sensor block 302 and the multi-bit output from the torque sensor block 304.

The NCAPS and the NCDCTS torque sensor, which may be used respectively as the angular position sensor and the torque sensor in the exemplary embodiments, are based on two different theories. NCAPS is based on a transceiver/down converter technology, where the transmitted frequency, for example, is 1 MHz, the receiver local oscillator frequency is 1 MHz plus 2.22 KHz with 60 degree phase shift and the IF is 2.22 KHz with a phase that varies proportional to the angular position of the coupler. The NCDCTS is based on a passive parallel plate differential capacitor technology, where there is a 10 KHz signal, for example, from the signal condition input C1 and C2, and the output of the signal conditioning circuit is based on the detection of the differential amplitude of the 10 KHz signal after coupling through C1 and C2. Hence, the combination of these two types of sensors into one package using a single housing will not be susceptible to significant cross talk and interference problems.

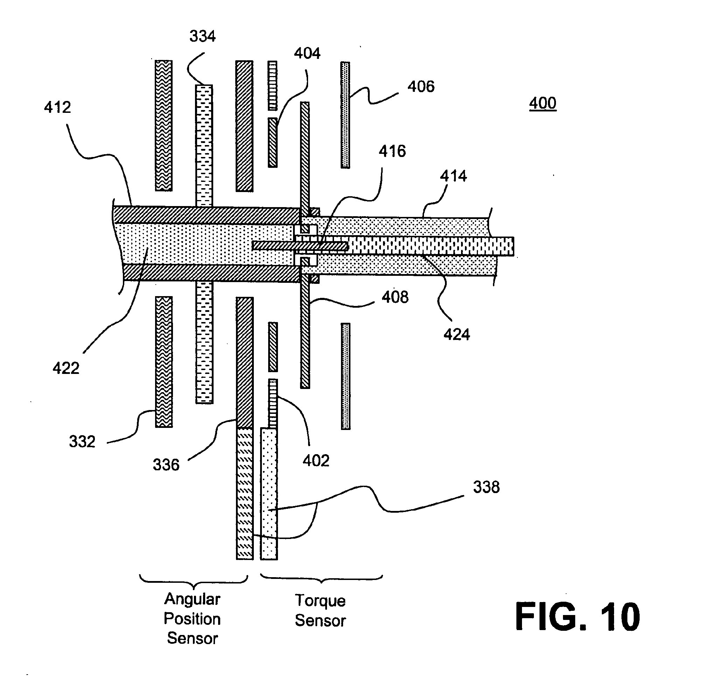

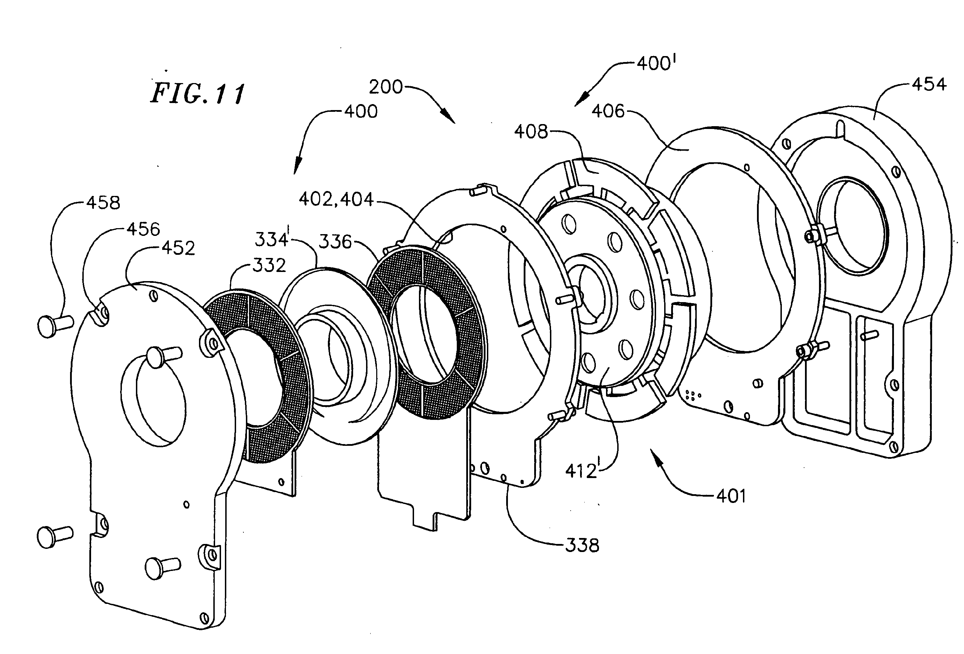

FIG. 10 is a partial sectional view of an angular-torque sensor 400 in exemplary embodiments according to the present invention. The angular-torque sensor 400 includes both an angular position sensor and a torque sensor for performing both the angular position sensor and torque sensor functions. The angular position sensor includes a transmitter 332, a receiver 336 and a coupler 334 disposed between the transmitter 332 and the receiver 336, and operates in substantially the same manner as the angular position sensor of FIGs. 1-4. While the transmitter 332 and the receiver 336 are substantially fixed with respect to each other and to the housing (e.g., shown in FIG. 11), the coupler 334 rotates between the receiver and transmitter pair as a first rotor 412 rotates, where the first rotor 412 is substantially fixed to and rotates together with an upper shaft 422.

For the torque sensor, which operates in substantially the same manner as the torque sensor of FIGs. 6-8, a plate having ring patterns 402 and 404 disposed thereon and a plate having a ring pattern 406 are substantially fixed to the same housing as the transmitter 332 and the receiver 336. A paddle assembly having paddles 408 is mounted on the second rotor 414 in such a manner that the paddles 408 move in at least a radial direction between the ring plates. Since the upper and lower shafts 422 and 424 are coupled together via a torsion rod 416, and the location of the paddles are determined by the degree of rotation between the rotors 412 and 414, the torque sensor measures torque exerted on the steering column (i.e., shaft assembly) having the upper and lower shafts 422 and 424.

The angular-torque sensor 400 also includes a printed circuit board (PCB) 338, which is used to carry circuitry for performing one or more signal processing functions such as, but not limited to, that required for analog position sensing and output and torque sensing and output as well as linearization and temperature compensation of the torque sensor output.

While the first rotor 412 and the coupler disk 334 are shown as two separate pieces in FIG. 10, in practice, they may be formed as a single integrated piece. Alternatively, the coupler disk 334 may be mounted directly on the upper shaft 422 rather than being mounted on the first rotor 412. The first rotor 412 and the coupler disk 334, whether they are formed as a single integrated piece or as two separate pieces, should be substantially fixed to the upper shaft 422 and rotated together therewith.

An exploded view of an angular-torque sensor 400' is illustrated in FIG. 11. The angular-torque sensor 400' may be substantially the same as the angular-torque sensor 400 of FIG. 10, except that the coupler disk 334' may be mounted on an upper shaft (e.g., the upper shaft 422 of FIG. 10) rather than on a first rotor 412'.

As can be seen in FIG. 11, the transmitter 332, a coupler disk 334', and the receiver 336 for forming an angular position sensor as well as the ring plates having rings 402, 404 and 406, respectively, and a paddle assembly 401 are packaged in the same housing formed by right and left end plates 452 and 454. The end plates have a number of holes 456 for fastening them to each other using fasteners 458 (e.g., screws or bolts). In other embodiments, any other suitable fastening method may be used instead of or in addition to the holes and fasteners. Each of the end plates 452 and 454 includes a generally rectangular extended portion. The extended portion is used to enclose the PCB 338 on which signal processing circuitry is formed/mounted. The transmitter and receiver 332 and 336, and the ring plates are substantially fixed to the housing such that they do not rotate together with either the upper shaft or the lower shaft.

FIG. 12 is a functional block diagram of a signal processing portion 500 of the angular-torque sensor in a second exemplary embodiment according to the present invention. The signal processing portion 500 includes a linearization block 502 for receiving outputs of the angular position sensor and the torque sensor, respectively, and for generating a 10-bit linearized torque sensor output ("linearized torque output code") 507.

The linearized torque sensor output 507 is provided to a temperature compensation block 508. The temperature compensation block 508 also receives a digitized temperature signal generated by an ADC 506 using a temperature output of a temperature sensor 504. Using the linearized torque sensor output 507 and the digitized temperature signal, the temperature compensation block 508 generates and outputs a linearized and temperature compensated digital torque sensor output 509 to a DAC 510. The torque outputs in FIG. 12 are 10 bits each in width. In other embodiments, the torque sensor output may have a number of bits that is different from 10. The DAC 510 converts the linearized and temperature compensated digital torque sensor output 509 to an analog voltage signal Vₒ and outputs it as a linearized and temperature compensated torque sensor output.

In practice, the linearization block 502 may be implemented as a look-up table in memory. The entries of the look-up table may represent linearized torque sensor output values for mapping the torque sensor output to a linearized torque sensor output for each angle between 0 and 359 degrees in one degree increment.

In the described embodiment of FIG. 12, a combination of the 9-bit angular position sensor output and the 10-bit torque sensor output is used as a 19-bit address to select one of the entries of the look-up table. This way, a corresponding 10-bit linearized torque sensor output can be selected for each 10-bit torque sensor output which is input to the look-up table, depending on the angular position indicated by the 9-bit angular position sensor output.

Similarly, the temperature compensation block 508 may also be implemented as a look-up table in memory. The entries of the look-up table may represent linearized and temperature compensated torque sensor output values for mapping the linearized torque sensor output to a linearized and temperature compensated torque sensor output based on the temperature measured by the temperature sensor 504. The ADC 506 generates a multi-bit (e.g., 10) output corresponding to the temperature measurement.

In the described embodiment of FIG. 12, a combination of the multi-bit digitized temperature measurement and the 10-bit torque sensor output is used as an address to select one of the entries of the look-up table. This way, a corresponding 10-bit linearized and temperature compensated torque sensor output can be selected for each 10-bit linearized torque sensor output which is input to the look-up table, depending on the temperature measured by the temperature sensor 504.

FIG. 13 is a functional block diagram of a signal processing portion 600 of the angular-torque sensor in a third exemplary embodiment according to the present invention. The signal processing portion 600 includes a linearization block 602 for receiving outputs of the angular position sensor and the torque sensor, respectively, and generating a 10-bit linearized torque sensor output 607.

The linearized torque sensor output 607 is provided to a 10-bit DAC 610. During the conversion of the linearized torque sensor output 607 to an analog torque sensor output, the DAC 610 receives an offset voltage from a scaling amplifier 606 corresponding to a temperature signal generated by a temperature sensor 604. The torque outputs in FIG. 13 are 10 bits in width. In other embodiments, the torque sensor output may have a number of bits that is different from 10. The DAC 610 converts the linearized torque sensor output 607 to an analog voltage signal Vₒ and outputs it as a linearized and temperature compensated torque sensor output. In substantially the same manner as the linearization block 502 in the second exemplary embodiment of FIG. 12, the linearization block 602 may be implemented as a look-up table in memory.

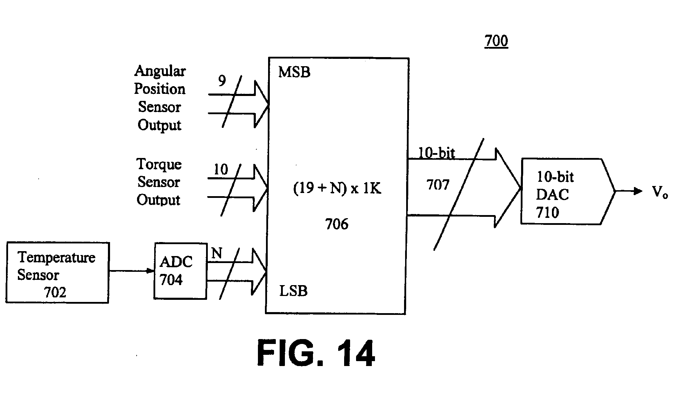

FIG. 14 is a functional block diagram of a signal processing portion 700 in a fourth exemplary embodiment according to the present invention. The signal processing portion 700 includes a temperature sensor 702 for generating temperature data, which is converted by an ADC 704 as a digitized temperature data having N bits. The signal processing portion 700 also includes a linearization and temperature compensation block 706 for receiving outputs of the angular position sensor, the torque sensor, and the digitized temperature data, and generating a 10-bit linearized and temperature compensated digital torque sensor output 707.

The linearization and temperature compensation block 706, for example, may include a look-up table implemented in memory. For example, the 9-bit angular position sensor output, the 10-bit torque sensor output and the N-bit digitized temperature data may be combined as a 19+N bit address for selecting one of the entries in the look-up table, which represent linearized and temperature compensated torque sensor output values.

In other words, the look-up table maps each (uncompensated) torque sensor output to a corresponding linearized and temperature compensated torque sensor output based on the angular position output (e.g., 0 to 359 degrees in one degree increment) and depending on the temperature measured by the temperature sensor 702. The look-up table, for example, may have the size of (19 + N) x 1K for storing all the entries. In other embodiments, the linearization and temperature compensation block 706 may include logic circuitry for providing such temperature compensation.

The linearized and temperature compensated digital torque sensor output 707 is provided to a 10-bit DAC 710. The torque outputs in FIG. 14 are 10 bits in width. In other embodiments, the torque sensor output may have a number of bits that is different from 10. The DAC 710 converts the linearized and temperature compensated digital torque sensor output 707 to an analog voltage signal Vₒ and outputs it as a linearized and temperature compensated torque sensor output.

While certain exemplary embodiments of the present invention have been described above in detail and shown in the accompanying drawings, it is to be understood that such embodiments are merely illustrative of and not restrictive of the broad invention. It will thus be recognized that various modifications may be made to the illustrated and other embodiments of the invention described above, without departing from the broad inventive scope thereof. In view of the above it will be understood that the invention is not limited to the particular embodiments or arrangements disclosed, but is rather intended to cover any changes, adaptations or modifications which are within the scope and spirit of the present invention as defined by the appended claims, and equivalents thereof.

## Claims

1. A sensor assembly comprising:
an angular position sensor unit for generating a first multi-bit output indicative of a degree of rotation of a shaft assembly having a first shaft and a second shaft that are substantially co-axial to each other and coupled to each other via a torsion rod;
a torque sensor unit for generating a second multi-bit output indicative of a torque exerted between the first shaft and the second shaft; and
a housing for enclosing both the angular position sensor unit and the torque sensor unit in a single package.

2. The sensor assembly of claim 1, further comprising processing circuitry for receiving the first multi-bit output and the second multi-bit output, and using the first multi-bit output and the second multi-bit output to generate a linearized and temperature compensated torque sensor output.

3. The sensor assembly of claim 2, wherein the processing circuitry comprises a look-up table having a plurality of entries representing linearized torque sensor output values that are selected using a combination of the first and second multi-bit outputs as an address.

4. The sensor assembly of claim 3, wherein the processing circuitry further comprises a temperature sensor block for measuring temperature to generate a digital temperature output, and a temperature compensation block for receiving a selected one of the entries representing the linearized torque sensor output values and the digital temperature output, and using them to generate the linearized'and temperature compensated torque sensor output.

5. The sensor assembly of claim 4, wherein the temperature sensor block includes a temperature sensor for measuring the temperature to generate a temperature output and an analog-to-digital converter for digitizing the temperature output to generate the digital temperature output.

6. The sensor assembly of claim 4, wherein the temperature compensation block comprises a look-up table having a plurality of entries representing linearized and temperature compensated torque sensor output values that are selected using a combination of the selected one of the entries representing the linearized torque sensor output values and the digital temperature output as an address.

7. The sensor assembly of claim 3, wherein the processing circuitry further comprises a temperature sensor for measuring temperature to generate a temperature output, a scaling amplifier for receiving the temperature output and generating an offset voltage therefrom, and a digital-to-analog converter for converting a selected one of the entries using the offset voltage to generate the linearized and temperature compensated torque sensor output.

8. The sensor assembly of claim 2, wherein the processing circuitry further comprises a temperature sensor block for measuring temperature to generate a digital temperature output, and a look-up table having a plurality of entries representing linearized and temperature compensated torque sensor output values that are selected using a combination of the first and second multi-bit outputs and the digital temperature output as an address.

9. The sensor assembly of claim 8, wherein the temperature sensor block includes a temperature sensor for measuring the temperature to generate a temperature output and an analog-to-digital converter for digitizing the temperature output to generate the digital temperature output.

10. A steering shaft assembly comprising the sensor assembly of claim 1 mounted on the shaft assembly for controlling steering of a vehicle.

11. A sensor system for generating a linearized and temperature compensated torque sensor output comprising:
an angular position sensor block for generating a first multi-bit output indicative of a degree of rotation of a shaft assembly having a first shaft and a second shaft that are substantially co-axial to each other and coupled to each other via a torsion rod;
a torque sensor block for generating a second multi-bit output indicative of a torque exerted between the first shaft and the second shaft;
a linearization block for receiving the first and second multi-bit outputs and using them to generate a linearized torque sensor output; and
a temperature compensation block for receiving the linearized torque sensor output and using it to generate the linearized and temperature compensated torque sensor output.

12. The sensor system of claim 11 wherein the angular position sensor block includes an angular position sensor for generating a signal indicative of the degree of rotation of the shaft assembly, and a counter for generating the first multi-bit output using the signal indicative of the degree of rotation of the shaft assembly.

13. The sensor system of claim 12, where the signal indicative of the degree of rotation of the shaft assembly is a pulse width modulated signal, and a magnitude of the first multi-bit output corresponds to a width of the pulse width modulated signal.

14. The sensor system of claim 11, wherein the linearization block includes a look-up table having a plurality of entries representing linearized torque sensor output values that are selected using a combination of the first and second multi-bit outputs as an address to generate the linearized torque sensor output.

15. The sensor system of claim 11, further comprising a temperature sensor block for measuring temperature to generate a digital temperature output, wherein the temperature compensation block receives the linearized torque sensor output and the digital temperature output and uses them to generate the linearized and temperature compensated torque sensor output.

16. The sensory system of claim 15, wherein the temperature compensation block comprises a look-up table having a plurality of entries representing linearized and temperature compensated torque sensor output values that are selected using a combination of the linearized torque sensor output and the digital temperature output as an address.

17. The sensor system of claim 11, wherein the temperature compensation block includes a temperature sensor for measuring temperature to generate a temperature output, a scaling amplifier for receiving the temperature output and converting it to an offset voltage, and a digital-to-analog converter for converting the linearized torque sensor output using the offset voltage to generate the linearized and temperature compensated torque sensor output.

18. A sensor system for generating a linearized and temperature compensated torque sensor output comprising:
an angular position sensor block for generating a first multi-bit output indicative of a degree of rotation of a shaft assembly having a first shaft and a second shaft that are substantially co-axial to each other and coupled to each other via a torsion rod;
a torque sensor block for generating a second multi-bit output indicative of a torque exerted between the first shaft and the second shaft; and
a linearization and temperature compensation block for receiving the first and second multi-bit outputs and using them to generate the linearized and temperature compensated torque sensor output.

19. The sensor system of claim 18, further comprising a temperature sensor block for generating a digital temperature output, which is used together with the first and second multi-bit outputs to generate the linearized and temperature compensated torque sensor output.

20. The sensor assembly of claim 19, wherein the linearization and temperature compensation block includes a look-up table having a plurality of linearized and temperature compensated torque sensor output values as entries, wherein the digital temperature output and the first and second multi-bit outputs are used in combination to address the look-up table to select one of the linearized and temperature compensated torque sensor output values to output it as the linearized and temperature compensated torque sensor output.

21. A method of linearizing and temperature compensating a torque sensor output indicative of a torque exerted between a first shaft and a second shaft of a shaft assembly that are substantially co-axial to each other and coupled together via a torsion rod, the method comprising:
generating an angular position signal indicative of a degree of rotation of the shaft assembly;
converting the angular position signal to a first multi-bit signal;
generating the torque sensor output;
converting the torque sensor output to a second multi-bit signal; and
generating a linearized and temperature compensated torque sensor output using the first and second multi-bit signals.

22. The method of claim 21, wherein said generating a linearized and temperature compensated torque sensor output comprises combining the first and second multi-bit signals as an address for selecting one of a plurality of entries of a first look-up table to generate a linearized torque sensor output.

23. The method of claim 22, wherein said generating a linearized and temperature compensated torque sensor output further comprises measuring temperature to generate a digital temperature output and using a combination of the digital temperature output and the linearized torque sensor output as an address for selecting one of a plurality of entries of a second look-up table to generate the linearized and temperature compensated torque sensor output.

24. The method of claim 22, wherein said generating a linearized and temperature compensated torque sensor output further comprises measuring temperature to generate a temperature output, scaling the temperature output to generate an offset voltage, and converting the linearized torque sensor output to an analog signal using the offset voltage to generate the linearized and temperature compensated torque sensor output.

25. The method of claim 21, further comprising measuring temperature to generate a digital temperature output, and combining the digital temperature output and the first and second multi-bit signals as an address for selecting one of a plurality of entries of a look-up table to generate the linearized and temperature compensated torque sensor output.
